# EUROPEAN PATENT APPLICATION

(11) **EP 3 181 599 A1**
(43) Date of publication of application: **21.06.2017**
(21) Application number: 15201075.7
(22) Date of filing: 18.12.2015
(51) Int. Cl.: C08F 210/02, C08F 220/18, C08F 2/02

(54) **NOVEL PROCESS FOR PRODUCING A POLAR ETHYLENE COPOLYMER WITH LOW MELT FLOW RATE**

(71) Applicant: Borealis AG, 1220 Vienna (AT)
(72) Inventor: Bergqvist, Mattias, 41674 Göteborg (SE); Yalalov, Denis, 44430 Stenungsund (SE); Johansson, Kenneth, Stenungsund 44445 (SE); Sultan, Bernt-Åke, SE-444 42 Stenungsund (SE)
(74) Representative: Kador & Partner

(57) **Abstract**

The invention relates to a process for producing a polar ethylene copolymer comprising a polar comonomer with low MFR₂. The polar ethylene copolymer can be heat treated to further include an acrylic acid.

The invention also relates to a polar ethylene copolymer, a layered structure comprising the polar ethylene copolymer and to a cable comprising the polar ethylene copolymer and to the use the polar ethylene copolymer in compounding.

## Description

### Field of the invention

The invention relates to a process for producing a polar ethylene copolymer with low MFR₂ comprising a polar comonomer comprising an acrylate with a bulky side group. The polar ethylene copolymer can be heat treated to further include an acrylic acid.
The invention also relates to a polar ethylene copolymer, a layered structure comprising the polar ethylene copolymer and to a cable comprising the polar ethylene copolymer and to the use the polar ethylene copolymer in compounding.

### Background of the invention

LDPE (Low density polyethylene) is made by high pressure radical polymerisation process. The process is characterised by the high pressures, but also by the high temperatures. LDPE is commonly used in several applications, such as film, coating and wire & cable. Many of these applications require polar groups in the LDPE. Conventional polar comonomers are for example vinyl acetate or various acrylates.
The polar comonomers are added to improve the properties of LDPE, such as flexibility, compability with for example fillers and to improve adhesive properties.
Another important property of the LDPE is processability, often expressed as MFR₂, which has big influence for example during compounding or processing LDPE by extrusion and/or moulding. Each application of LDPE has their specific required MFR₂. Typically for wire & cable applications low MFR₂ is required. It brings for example better mechanical properties, less dripping in flame retardant applications and improved crosslinking properties.

Another functionality that can be introduced in LDPE is the ability to crosslink the LDPE with ionic bonds. This can be done by using a polar copolymer comprising for example (meth)acrylic acid in combination with a suitable filler. The drawback of such acidic comonomers is obvious, especially when used at the high temperatures and pressures during polymerisation of LDPE.

Tert-Butyl(Meth)Acrylates (TB(M)A) is mentioned in patents concerning ethylene acrylate copolymers. The comonomer can be heat treated to degrade via ester pyrolysis into a terpolymer comprising both TB(M)A and (meth)acrylic acid. The disclosed examples lead to a MFR₂ that are too high for many applications, such as wire & cable applications. It is long sought problem to decrease the MFR₂ of such polymers.

US 3,132,120, filed 1961 by DuPont, discloses a polymerization of ethylene together with TB(M)A at 100 - 250°C and 50 - 3000 bar and a complete ester pyrolysis.

US 3,736,305, filed 1968 by BASF, discloses polymerization of ethylene together with TBA at 110 - 350°C and 100 - 8000 bar with high MFR₂. The ester pyrolysis seems to be made in reactor.

US 4,122,248, filed 1978 by BASF, disclose producing a terpolymer by polymerization of ethylene together with TB(M)A at 200 - 350°C and 800 - 3000 bar. The MFR₂ is high due un-pure ethylene (98% pure), to high maximum peak temperatures in the high pressure reactor and that the reactor is small, i.e. short residence time and that all unreacted monomers are recycled.

Object of the invention is to produce a polar ethylene copolymer comprising a polar comonomer of formula (I) with as low MFR₂ as possible, typically a MFR₂ of below 4 g/10min.

One advantage of the invention is that the polar comonomer of formula (I) participates mainly in propagation reactions. This means that the amount of comonomers of formula (I) can be independently designed in relation to other process parameters.

The invention also relates to a process for making a polar ethylene copolymer comprising monomers of ethylene and polar comonomer of formula (I) wherein the comonomer comprising formula (I) itself has low CTA effect, seen as no changes in the MFR₂. Another object of the invention is to reduce the amount of alkene from the ester pyrolysis, in the high pressure tubular reactor. The alkene acts as a CTA and negatively influence the possibility to keep MFR₂ low.

Another object of the invention is to make a polar ethylene copolymer comprising acrylic acid groups without the drawback of having comonomers that includes (meth)acrylic acid in the high pressure reactor. Such monomers are highly corrosive, especially at high temperatures in combination with high pressures. Monomer of (meth)acrylic acids either increases the wear and tear of the high pressure reactor or requires big investments in non-corrosive materials.

The invention also relates to a process for producing a terpolymer of ethylene, polar copolymer of formula (I) and (meth)acrylic acid, in which the drawback of (meth)acrylic acids as described above are avoided.

### Summary of the invention

The invention relates to a process for producing a polar ethylene copolymer comprising a polar comonomer of formula 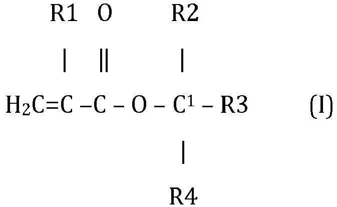
in which R1 is -H or an alkyl group with 1-6 carbon atoms,
R2, R3 & R4 each comprise an alkyl group with 1 to 6 carbon atoms
and the amount of polar comonomer of formula (I) is 3 to 40 wt% in the polar ethylene copolymer and the MFR₂ is 0.1 to 4 g/10min,
comprising the steps of;
   a. feeding a high pressure radical polymerisation reactor with fresh ethylene, the polar comonomer of formula (I),
   b. recovering the polar ethylene copolymer in a subsequent step,
wherein that the fresh ethylene that is fed into the high pressure reactor is 99.5 wt% pure.

Polymers are defined to have more than at least 1000 repeating units. The definition of ethylene copolymer is a polymer with more than 50 wt% of ethylene monomer.

With the expression "polar ethylene copolymer" means "the polar ethylene copolymer comprising a polar comonomer of formula (I)" throughout the text.

It has surprisingly been found that pure ethylene feed gives lower MFR₂.

The invention also relates to a polar ethylene copolymer comprising a polar comonomer of formula 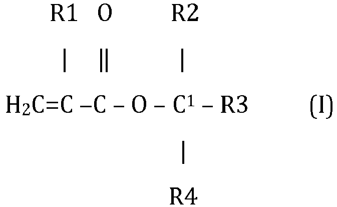
in which R1 is -H or an alkyl group with 1-6 carbon atoms,
R2, R3 & R4 each comprise an alkyl group with 1 to 6 carbon atoms
and the amount of polar comonomer of formula (I) is 3 to 40 wt% in the polar ethylene copolymer and the MFR₂ is 0.1 to 4 g/10min.

The invention further relates to a layered structure comprising a substrate of metal and a polymer layer adjacent to the metal, wherein the polymer layer comprises the polar ethylene copolymer according to any embodiment.

The invention is also a cable comprising a metal conductor and at least one polymer layer comprising the polar ethylene copolymer according to an embodiment wherein the at least one polymer layer surrounds the metal conductor.

Last, the invention also relates to the use of a polar ethylene copolymer comprising the polar comonomer of formula (I) according to any previous embodiment wherein the compounding is done at a maximum 220°C, suitably at a maximum of 200°C. Any compounding step is included, such as pelletizing, making compounds and extruding cables. The advantage is that no additional (meth)acrylic acid is formed in the additional steps.

It is an essential part of the invention that the carbon (C¹ in formula (I)) that the R2, R3 and R4 are attached to is a quaternary carbon atom, i.e. no hydrogen is attached. The R2, R3 and R4 groups will favour the reaction of releasing an alkene through ester pyrolysis reaction. The polar comonomer will then comprise a -COOH group, referred to as (meth)acrylic acid. The term "(meth)acrylic" is intended to embrace both acrylic and methacrylic. The -COOH group can form ionic bonds that for example improve adhesion, mechanical and flame retardant properties.

The ethylene copolymer of the invention is produced by polymerising ethylene with a polar comonomer of formula (I) units as defined above in a high pressure (HP) radical polymerisation process using free radical polymerization in the presence of one or more initiator(s) and optionally using a chain transfer agent (CTA) to control the MFR of the polymer.

The HP reactor can be e.g. a well-known high pressure tubular or autoclave reactor or a mixture thereof, suitably a high pressure tubular reactor. The high pressure tubular reactor has the advantages of better homogeneity and narrower molecular weight distribution. The free radical polymerization takes place in the reactor only. The high pressure (HP) radical polymerisation and the adjustment of process conditions for further tailoring the other properties of the ethylene copolymer depending on the desired end application are well known and described in the literature, and can readily be used by a skilled person. Suitable polymerisation temperatures range up to 400°C, preferably from 80 to 350°C and pressure from 700 bar, preferably 1000 to 4000 bar, more preferably from 1000 to 3500 bar. The high pressure polymerization is generally performed at pressures of 1000 to 4000 bar and at temperatures of 80 to 350°C. Such processes are well known and well documented in the literature.

The incorporation of the comonomer according to formula (I) units, as well as optional other comonomer(s), and the control of the comonomer feed to obtain the desired final content of said ethylene copolymer containing comonomer according to formula (I) units can be carried out in a well-known manner and is within the skills of the skilled person.

The production of ethylene copolymers at high pressures is a highly exothermic reaction, and requires the removal of large amounts of heat. For this reason, the reaction is normally carried out in a tubular reactor, and conversion of monomer to polymer in a single pass through the reactor is ordinarily from about 10% to about 25% of the charged monomers. The unreacted ethylene, comonomer and formed polymer are released from the tubular reactor through a valve, which is opened periodically. The reaction mixture is collected in one or more product receivers where the formed polymer and unreacted monomers are separated from each other. The pressure in the product receiver(s) is much lower than that in the reactor, and the sudden drop in pressure facilitates the removal of unreacted ethylene and comonomer from the formed polymer.

Further details of the production of polar ethylene copolymer by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

### Detailed description of the invention

In one embodiment is the polar comonomer of formula 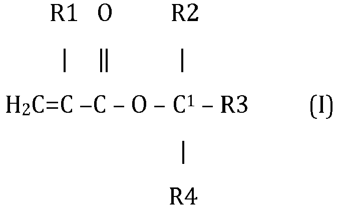
in which R1 is -H or an alkyl group with 1-6 carbon atoms,
R2, R3 & R4 each comprise an alkyl group with 1 to 6 carbon atoms.
R1 group is -H or an alkyl group with 1-6 carbon atoms, suitably R1 is -CH₃, which makes the polar ethylene copolymer more temperature stable. This feature of the invention will improve the extrusion characteristics of the compound and make it more temperature stable, meaning longer production campaign and less cleaning of the extruder, since fewer deposits in extruder. R2, R3 & R4 each comprise an alkyl group with 1 to 6 carbon atoms, suitable R2, R3 & R4 groups are identical and all three R2 groups comprise no heteroatoms, i.e. only carbon and hydrogen atoms. Most suitably all three R2 are -CH₃, which is the most temperature stable, in which the polar comonomer comprise a polar comonomer of tert-butyl acrylate.

The polar ethylene copolymer suitably has an MFR₂ of 0.3 to 3 g/10min, more suitable 0.5 to 3 g/10min.

The polar ethylene copolymer suitably comprises an additional comonomer which is fed together with the fresh ethylene and the polar comonomer of formula (I). They can add further functionality and properties to the polar ethylene copolymer. Examples of such additional comonomers are polyunsaturated comonomer, unsaturated silane containing comonomers and polar containing comonomers. Either can a single additional comonomer be used or can a mixture of additional comonomers be used. The comonomer of the invention has the advantage that it will not interact with the additional comonomer(s) and can consequently be used in any amount. It can be selected independently of the other additional comonomers.

The additional polyunsaturated comonomers are preferably selected from a group of polyunsaturated olefin comprising at least 6 carbon atoms and at least two nonconjugated double bonds of which at least one is terminal. Most preferably the polyunsaturated olefin is selected from 1,7-octadiene, 1,9-decadiene, 1,11-dodecadiene 1,13-tetradecadiene, 7-methyl-1,6-octadiene, 9-methyl-1,8-decadiene, or mixtures thereof, more preferably from 1,7-octadiene, 1,9-decadiene, 1,11-dodecadiene and 1,13-tetradecadiene. One advantage of the invention is that the polar comonomer of formula (I) will not interact with any polyunsaturated comonomers as described above.

The additional unsaturated silane containing comonomers are preferably selected from a group of represented by the formula:

R6SiR7qY3-q (III)

R6 is an ethylenically unsaturated hydrocarbyl, hydrocarbyloxy or (meth)acryloxy hydrocarbyl group, each R7 is independently an aliphatic saturated hydrocarbyl group, Y which may be the same or different, is a hydrolysable organic group and q is 0, 1 or 2. Special examples of the unsaturated silane compound are those wherein R1 is vinyl, allyl, isopropenyl, butenyl, cyclohexanyl or gamma-(meth)acryloxy propyl; Y is methoxy, ethoxy, formyloxy, acetoxy, propionyloxy or an alkyl-or arylamino group; and R7, if present, is a f wherein R6 is vinyl, allyl, isopropenyl, butenyl, cyclohexanyl or gamma-(meth) acryloxy propyl; Y is methoxy, ethoxy. One advantage of the invention is that the polar comonomer of formula (I) will decrease the crystallinity of the ethylene comonomer, meaning water vapour transmission rate will increase. Consequently the polar ethylene copolymer with an additional monomer of an unsaturated silane will crosslink faster compared to a polar ethylene copolymer without a polar comonomer of formula (I).

The additional polar containing comonomers are preferably selected from a group of vinyl esters of monocarboxylic acids having 1 to 4 carbon atoms, such as vinyl acetate (VA), and (meth)acrylates of alcohols having 1 to 4 carbon atoms, such as methyl (meth)acrylate (MA & MMA). Especially preferable additional polar comonomers are butyl acrylate (BA), ethyl acrylate (EA) and methyl acrylate (MA). The most preferable the additional polar comonomer is MA due to the fact that it cannot be degraded by ester pyrolysis. The term "(meth)acrylic" is intended to embrace both acrylic and methacrylic.

The amount of the additional polar comonomers units in the polar ethylene copolymer is suitably 1 to 40 wt%, more suitably 5 to 30 wt%, and most suitably between 10 and 30 wt% of the polar ethylene copolymer. The additional polar comonomer suitably is selected from VA, BA, MA, MMA & EA or mixtures thereof, most suitably from BA, MA and EA.

The compressor unit may comprise a primary compressor unit and a hyper or secondary compressor unit. Each of those compressor units comprises in turn a number of individual compressors, e.g. piston compressors. The primary compressor unit compresses the ethylene feed comprising ethylene, polar comonomer of formula (I) and optional additional comonomers and CTA to a pressure between 50 and 300 bar, in particular 240 to 260 bar.

The pressurised ethylene feed is subsequently fed into the hyper or secondary compressor unit, which operates also in multiple stages such as two stages, wherein each stage comprises a number of compressors in parallel. After the first stage the ethylene feed is further pressurized to 1000 to 1400 bar, in particular 1100 to 1300 bar. Since the pressurization increases the temperature, the ethylene is cooled down before it is further pressurized by the second stage of the hyper compressor unit to pressures up to 3500 bar, in particular to 2500 to 3200 bar.

In an embodiment of the present process the preheater unit is operated at temperatures between 120 and 250°C, in particular between 150 and 200°C, and at a pressure between 1000 and 3500 bar, in particular between 2000 and 3000 bar. The ethylene feed is heated in the preheater unit to a temperature of from about 120 to 200°C, and then conveyed to the reactor. One advantage of the polar comonomer of formula (I) is that it is temperature stable up to 200°C, i.e. it is ready to use in any commercial polymerisation reactor without any modification of the process.

One embodiment relating to the process for making the polar ethylene copolymer is made in a high pressure reactor. In this embodiment the maximum peak temperature in the high pressure reactor is below 290°C, suitably below 280°C. The maximum peak temperature in the high pressure reactor is suitably in the range of 200°C to 290°C, more suitable 220°C to 280°C, even more suitably 250°C to 270°C. In a more suitable embodiment the high pressure reactor is a high pressure tubular reactor. The temperature profile over high pressure tubular reactor is measured and the highest temperature in each reaction zone is defined as peak temperature. It has been found that a lower maximum peak temperature gives lower MFR₂ of the polar ethylene copolymer. One embodiment of the process for making the polar ethylene copolymer relates to a residence time in the high pressure tubular reactor of 1 to 30 min, suitably 1 to 15 min. It has surprisingly been found that longer, i.e. larger, high pressure reactors give lower MFR₂.

The reaction mixture comprising ethylene feed and initiator reacts within the reactor under formation of polar ethylene copolymer. The mixture and polar ethylene copolymer as product leaves the reactor at the end thereof. The polymer and the volatile part of the reaction mixture comprising mainly ethylene monomer, comonomer(s) and chain transfer agent are subsequently separated from the polymer in a high pressure product receiver and a low pressure product receiver. The residence time in the high pressure product receiver is typically very short (level kept to a minimum), while the residence time in the low pressure product receiver is longer, typically about 20 minutes according to the invention.

The chain transfer agent and/or comonomer(s) can further be separated from the volatile part of the reaction mixture leaving the high pressure product receiver and low pressure product receiver, in particular from the ethylene monomer in a gas purification unit. The gas purification unit removes comonomer(s) and/or chain transfer agents from the reactor output. The gas purification unit is a distillation process as gas purification to purify the ethylene from especially gaseous co-monomer and/or chain transfer agents, typically propylene and isobutene.

The ethylene monomer as well as the comonomer(s) and chain transfer agent can be recycled within the present process, or alternatively may be separated by e.g. distillation and stored in a storage tank prior being reintroduced into the feed section of the compressor. In a suitable embodiment is the recycled stream purified in a separate step before the recycled stream is recycled, more suitably purified from isobutene.

The recycle stream containing comonomer(s) and chain transfer agent can be fed into a dewaxing unit prior to the gas purification unit. Here the gaseous mixture is separated from waxes in a traditional dewaxing unit. The chain transfer agent and / or comonomer might be separated from each other in a gas-purification unit or recycled back to the compressor unit. This means that the recycle stream comprises more or less pure ethylene.

In one embodiment of the invention the polar ethylene copolymer comprising a polar comonomer of formula (I) comprise a further functional group of -COOH (carboxylic group). The polar ethylene copolymer will then comprise two active side groups. The - COOH group is suitable an acrylic acid, more suitably a methacrylic acid. The -COOH group can form ion bonds with for example inorganic fillers. The functional group of - COOH is suitably created in a post reactor process, which can be any post reactor process taking place after the high pressure reactor. It is recommended to perform the post reaction by heat treatment, suitably in the product receiver, which already exists in typical high pressure polymerization units for low density polyethylene and its copolymers. The post reaction is controlled by carefully adjusting the temperature and residence time in the product receiver for receiving the targeted ratio of tertiary (meth) acrylate and carboxylic acid groups. Suitably the heat treatment downstream the reactor is performed at a temperature of 200 to 300°C, suitably 220°C to 280°C, most suitably 250 to 280°C. The residence time is 5 to 30 min, suitably 10 to 30 min, more suitably 15 to 25 min. The residence temperature and time shall be selected to react enough of the polar comonomer of formula (I) to an acrylic acid. A high temperature gives a faster reaction.

In one embodiment the polar ethylene copolymer is heat treated in the product receiver(s), suitably in the low pressure product receiver. In the product receiver(s) the polymer melt is collected after the polymerization step and the product receiver(s) act as a supply tank for the extruder which pelletizes the polymer melt.

In a suitable embodiment at least 5 wt% of the polar copolymer of the formula (I) is reacted into a functional group of -COOH, more suitable at least 30 wt%. In another embodiment 30 to 70 wt% the polar copolymer of the formula (I) is reacted into a functional group of -COOH.

The heat treatment of the polar ethylene copolymer after the reactor will change the polar comonomer of formula (I) to an acrylic acid, i.e. the bulky side group will be split off via ester pyrolysis. The heat treatment can be done by any suitable manner. One advantage of the invention is that very low level (meth)acrylic acid monomer is present in the reactor. An unsaturated acid is stronger than a saturated acid for example (meth)acrylic acid has a PKa value of 4.25, while a saturated one exemplified by hexanoic acid has a PKa value of 4.88. When copolymerized with ethylene the acid will also be dissolved in the supercritical reaction mixture where the water concentration is very low. By avoiding pumping a rather strong acid in which water is easily soluble the corrosive action on the process part of the high pressure reactor and it feeding systems will be significantly reduced. The invention is best utilized by having as short residence time in the high pressure reactor in combination with a suitable temperature in the high pressure reactor. If a monomer comprising (meth)acrylic acid would be used in the reactor would the wear and tear on the reactor increase dramatically due to corrosion caused by the carboxylic acid groups inside the reactor. Some of the polar ethylene copolymer will be reacted into an (meth)acrylic acid but with short residence time in the reactor in combination with controlled temperature will the amount of (meth)acrylic acid inside the reactor be at a level in which wear and tear can be kept at a minimum.

Suitably the high pressure reactor, in which the polar ethylene copolymer is made, has no fresh monomer feed to that comprises any -COOH groups, i.e. any (meth)acrylic acid groups. With no monomer feed means that no fresh feed comprises any monomer comprising -COOH groups. Feeds that comes from recycled stream is not fresh feed and might comprise small amount of monomer comprising -COOH, suitably the recycled stream is purified in at least one step, suitably in a separate step, and most suitably from any monomer comprising -COOH groups.

This is an advantageous process for manufacturing the polar ethylene copolymer comprising further functional groups of -COOH. In the reactor there is a very low level of carboxylic groups that are corrosive and cause wear and tear of the reactor. The carboxylic groups are mostly present in polymerised form, in which they are much less corrosive. Due to the high polymerisation reactivity in the high pressure reactor of acrylates more or less no polar copolymer of the formula (I) be created by the high temperature in the high pressure tubular reactor.

In one embedment the polar ethylene copolymer comprise an amount of 0.1 to 30 wt% of (meth)acrylic acid groups, suitably 1 to 20 wt% and most suitably 5 to 10 wt%.

The chain transfer agent can be selected from a group consisting of
- aldehydes, such as propionaldehyde, acetaldehyde, benzaldehyde,
- alcohols, such as isopropanol, t-butanol, methanol, 2-methyl-3-buten-2-ol, ethanol,
- saturated and unsaturated hydrocarbons, such as propane, propylene, butene-1,4-methylpentane-1, isobutylene, diisobutylene, ethane, 2,2-dimethylpropane, 2-methyl-3-buten, cyclopropane, methane, benzene, butane, 2,2,4-trimethylpentane, n-hexane, isobutane, n-heptane, cyclohexane, methylcyclohexane, propylene, n-decane, cyclopentane, n-tridecane, toluene, isobutylene, diisobutylene, 4-methylpentene-1, p-xylene, buten-2, buten-1, octene-1,2,methylbutene-2, cumen, 2methylbutene-1, ethylbenzene, n-hexadecene, 3-methylbutene-1, 2-ethylhexene-1,
- compounds comprising an ether, a keto group or a carboxyl group such as methyl ethyl ketone, ethylene oxide, vinyl-methyl-ether, methylacetate, t-butyl-acetate, methyl formate, ethyl acetate, methyl benzoate, ethyl benzoate, dimethoxymethane, n-butyl acetate, acetic anhydride, n-butyl benzoate, acetone, methyl butyrate, N,N-dimethylformamide, tetrahydrofuran, p-dioxane, 2-butanone, 3-methyl-2-butanone,
- compounds comprising other functional groups such as methyl vinyl sulfide, n-butyronitrile, tetramethylsilane, sulfur hexafluoride, perfluorpropane, dimethyl sulfoxide, triphenylphosphine, methylamine, N,N-diisopropylacetamide, 1,2-dichloethane, acetonitrile, N-ethylacetamide, N,N-diethylacetamide, 4,4-dimethylpentene-1, trimethylamine, N,N-dimethylacetamide, n-butyl isocyanate, n-butyl amine, diethyl sulfide, trimethylamine, 1-bromo-2-chlorethane, n-butyl isothiocyanate, methyl-3-cyanopropionate, tri-n-butylamine, isobutyronitrile, di-n-butylamine, methyl chloroacetate, 1,2-dibromoethane, dimethylamine, chloroform, 1,4-dichlorobutene-2, tri-n-butylphosphine, di-n-butyl-phosphine, dimethylphosphine, methyl cyanoacetate, carbon tetrachloride, bromotrichloromethane, phosphine, hydrogen, and mixtures thereof.

The use of propionaldehyde, propylene, propane, methyl ethyl ketone, hydrogen and isopropanol as chain transfer agent is in particular preferred.

In one embedment the process comprises very low amount of chain transfer agent, such as lower than 0.3 wt% of CTA, suitably lower than 0.1 wt%, most suitably no chain transfer agent. This enables as low as possible MFR₂ of the polar ethylene copolymer comprising a polar comonomer of formula (I).

In again a further embodiment of the process at least one polymerisation initiator is fed into the reactor as front feed and/or at least one location along the reactor. Usually the polymerisation initiator is injected into the reactor to start the polymerization reaction at desired position or reaction zone inside the reactor.

The polymerisation initiator is preferably selected from the group of organic peroxides. Examples of suitable organic peroxides are peroxy esters, peroxy ketals, peroxy ketones and peroxycarbonates, e.g. di(2-ethylhexyl) peroxydicarbonate, dicyclohexyl peroxydicarbonate, diacetyl peroxydicarbonate, tert-butyl peroxyisopropylcarbonate, di-tert-butyl peroxide, di-tert-amyl peroxide, dicumyl peroxide, 2,5-dimethyl-2,5-di-tert-butylperoxyhexane, tert butyl cumyl peroxide, 2,5-dimethyl-2,5-di(tert-butylperoxy)hex-3-yne, 1,3-diisopropyl monohydroperoxide or tert-butyl hydroperoxide, didecanoyl peroxide, 2,5-dimethyl-2,5-di(2-ethyl-hexanoylperoxy)hexane, tert-amyl peroxy-2-ethylhexanoate, dibenzoyl peroxide, tert butyl peroxy-2-ethylhexanoate, tert-butyl peroxydiethylacetate, tert-butyl peroxydiethylisobutyrate, tertbutylperoxy-3,5,5-trimethylhexanoate,1,1-di(tert-butylperoxy)-3,3,5-trimethylcyclohexane, 1,1-di(tert-butylperoxy)cyclohexane, tert butyl peroxyacetate, cumyl peroxyneodecanoate, tert-amylperoxyneodecanoate, tert-amyl peroxypivalate, tert-butyl peroxyneodecanoate, tert-butylpermaleate, tert-butyl peroxypivalate, tert-butyl peroxyisononanoate, diisopropylbenzene hydroperoxide, cumene hydroperoxide, tert butyl peroxybenzoate, methyl isobutyl ketone hydroperoxide, 3,6, 9-triethyl-3,6, 9-trimethyl-triperoxocyclononane and 2,2-di(tertbutylperoxy)butane. Oxygen, azoalkanes (diazenes), azodicarboxylic esters, azodicarboxylic dinitriles such as azobisisobutyronitrile and hydrocarbons which decompose into free radicals and are also referred to as C-C initiators, e.g. 1,2-diphenyl-1,2-dimethylethane derivatives and 1,1,2,2-tetramethylethane derivatives, are also suitable. It is also possible to use an initiator mix with a high temperature initiator and a low temperature initiator, which can be fed simultaneously or separately into the reactor.

The most preferred initiators are di-tert-butyl peroxide (DTBP), tert-butylperpivalate (TBPPI), tert-amylperoxy pivalate (TAPPI) and tert-butylperoxy-2-ethyl-hexanoate.

The invention also relates to a polar ethylene copolymer comprising a polar comonomer of formula 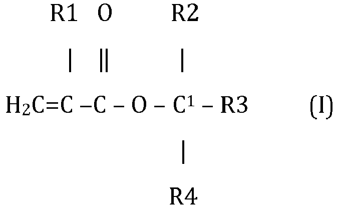
in which R1 is -H or an alkyl group with 1-6 carbon atoms,
R2, R3 & R4 each comprise an alkyl group with 1 to 6 carbon atoms
and the amount of polar comonomer of formula (I) is 3 to 40 wt% in the polar ethylene copolymer and the MFR₂ is 0.1 to 4 g/10min.

The polar ethylene copolymer comprising a polar comonomer of formula (I) can be according to any embodiment in this text. The polar ethylene copolymer comprising a polar comonomer of formula (I) is obtainable from any process embodiment described in this text.

The invention further relates to a layered structure comprising a substrate of metal and a polymer layer adjacent to the metal, wherein the polymer layer comprises the polar ethylene copolymer. Adjacent means in close contact, suitable in direct contact with the metal layer. Suitably is the layered structure a wire cable in which the substrate is a metal conductor, typically aluminium or copper.

The invention is also a cable comprising a metal conductor and at least one polymer layer comprising the polar ethylene copolymer comprising the polar comonomer of formula (I) wherein the at least one polymer layer surrounds the metal conductor. Suitably do all polymer layers in the cable comprise the polar ethylene copolymer comprising the polar comonomer of formula (I).

Another embodiment of the invention is a cable with a metal conductor, typically aluminium or copper, and a polymer layer surrounding the metal conductor. The cable is suitable a flame retardant cable comprising at least one layer comprising the flame retardant composition. The halogen free flame retardant polymer composition according to the present invention is suitable for the manufacture of wires, cables and/or electrical devices. Cables may be communication cables or more suitable electrical or power cables. The cable can typically be used in buildings or in automotive applications. The compositions can be extruded about a wire or cable to form an insulating or jacketing layer or can be used as bedding compounds. Therefore the present invention also provides a cable having a layer comprising the halogen free flame retardant polymer composition of the invention. Suitably is the cable a low voltage cable, typically below 1000 V. In another embodiment is the cable a communication cable wherein the jacket comprises the halogen free flame retardant polymer composition, e.g. data and fibre optic cables.

The insulation layer of the low voltage power cable suitably has a thickness of 0.4 mm to 3.0 mm, more suitably 2 mm or lower, depending on the application. The insulation is suitably directly coated onto the metal conductor.

The polymer layer suitably comprises at least 50 wt% or more suitably more than 70 wt% of the polar ethylene copolymer comprising the polar comonomer of formula (I) any embodiment in this description.

### Test methods

### MFR

The melt flow rate MFR₂ was measured in accordance with ISO 1133 at 190°C and a load of 2.16 kg for ethylene homo and copolymers.

### Density

The method for determining density is following ISO 17872-2 for sample preparation and ISO 1183-1 / method A for the density measurement.

### Copolymer content

For the TBMA/MAA terpolymer the two different structures were quantified by FTIR. For TBMA the peak area of the peak absorbing at 3430 cm-1 was determined and for MAA the peak area at 1699 cm-1 was determined. Film thickness was used for normalisation. These peaks were calibrated by dissolving the corresponding monomers in a solution in accordance with ASTM D6248.

The BA and EA content of the EBA and EEA copolymer was determined in the same way by calculating the peak area height ratio of the peak absorbing at 840cm-1 and 3450cm-1 respectively and the reference peak at 2020cm-1. The same procedure was used for determine the VA content of the EVA copolymer by calculating the peak area height ratio of the peak absorbing at 610cm-1 and the reference peak at 2670cm-1.

### Thermogravimetrical analyse

Weight loss was measured on TA Instruments Q2000 differential scanning calorimetry device (DSC) according to ISO 11357/3 on 5 to 10 mg samples in an inert atmosphere of nitrogen.

### Examples

The polymerisation was performed in two-zone high pressure tubular reactor, 660 m long split feed high pressure reactor (Union Carbide type A-1). The inner wall diameter is 32 mm. Ethylene, 99.9 wt% pure, analysed by gas chromatography, comonomer and chain transfer agent was mixed prior to increasing the pressure of this reaction mixture using intensifiers. The pressure of the reaction mixture entering the reactor was between 2000 and 2500 bar. The reaction was initiated by radical generated from peroxide and oxygen. The peak temperatures on the reactor were between 200 - 300°C. The formed polymer was separated from the unreacted process gas in a product receiver operated at ~100 bar and 250°C. 50 wt% of the separated process gas was recycled back to the intensifiers, while the other 50 wt% was purified in a gas purification system and the purified ethylene returned to the process. The formed polymer is conveyed to an extruder where a degassing unit is connected (vent gas). Gaseous compounds are removed from the polymer and the vent gas is transported to the gas purification unit.

The isobutene formed in the ester pyrolysis of the TBMA in the recycle stream and the vent gas stream, was analysed by gas chromatography.

The comonomer content of TBMA and MMA in the polymer was analysed with FTIR. For determining the TBMA content the peak area of the peak found at 854 cm⁻¹ was used and for the MMA content the area under the peak at 1699 cm⁻¹ was used.

### Comparative Example 1

A mixture of 30000 kg/h of ethylene 150 kg/h of TBMA and 160 kg/h of chain transfer agent (MEK) was compressed to 2250 bars before part of the reaction mixture was fed to the reactor. 15000 kg/h was fed to the first reaction zone of the tubular reactor and 15000 kg/h to the second reaction zone. The peak temperature in the first reaction zone was 257°C and the second reaction zone was 315°C.
Product receiver temperature was 260°C with a residence time of 20min.

### Polymer properties Comparative Example 1

MFR (2.16kg/10 min) : 6.58
TBMA content: 0.09 wt%
MAA content: 0.6 wt%

### Comparative Example 2

A mixture of 30000 kg/h of ethylene 956 kg/h of TBMA and 20 kg/h of chain transfer agent (MEK) was compressed to 2250 bars before 15000 kg/h of the reaction mixture was fed to the first reaction zone of the tubular reactor and 15000 kg/h to the second reaction zone. The peak temperature in the first reaction zone was 250°C and the second reaction zone was 288°C.
Product receiver temperature was 250°C with a residence time of 20 min.

### Polymer properties Comparative Example 2

MFR (2.16kg/10 min) : 6.32
TBMA content: 5.0 wt%
MAA content: 4.5 wt%

### Inventive Example 1

A mixture of 30000 kg/h of ethylene 956 kg/h of TBMA was compressed to 2250 bars before 15000 kg/h of the reaction mixture was fed to the first reaction zone of the tubular reactor and 15000 kg/h part to the second reaction zone. The peak temperature in the first reaction zone was 240°C and the second reaction zone was 264°C.
Product receiver temperature was 248°C and a residence time of 20 min.

### Polymer properties Inventive Example 1

MFR (2.16kg/10 min) : 1.48
TBMA content: 5.8 wt%
MAA content: 5.8 wt%

From comparative example 1, comparative example 2 and inventive example 1 can it be seen that pure feed of ethylene lower the MFR₂ of the polar ethylene copolymer. Lowering the temperature in the product receiver also decrease the MFR₂, decrease the amount of CTA further decrease the MFR₂ and lowering the maximum peak temperature even further lowers the MFR₂ of the polar ethylene copolymer.

### Example 3

A mixture of 30000 kg/h of ethylene and various amount of TBMA was compressed to 2250 bars before 15000 kg/h of the reaction mixture was fed to the first reaction zone of the tubular reactor and 15000 kg/h part to the second reaction zone. The peak temperatures in the first reaction zone and the second reaction zone are as in table 1. Product receiver temperatures are in table 1 and a residence time of 20min.

**Table 1, disclosing Isobutene analysis during trial**

| TBMA feed (mol/h) | Isobutene in recycle stream (mol/h) | Isobutene in vent gas stream (mol/h) | Conversion to methacrylic acid (wt%) | Peak 1 temperature (°C) | Peak 2 temperature (°C) | Product receiver temperature (°C) |
|---|---|---|---|---|---|---|
| 514 | 318 | 93 | 80 | 258 | 314 | 260 |
| 1661 | 1018 | 251 | 76 | 258 | 315 | 260 |
| 6855 | 4237 | 971 | 76 | 253 | 311 | 250 |
| 9367 | 4467 | 1545 | 64 | 252 | 293 | 248 |
| 8579 | 1770 | 2715 | 52 | 253 | 261 | 246 |

From table 1 it can be seen that the formation of isobutene is temperature dependant. One unit of isobutene is formed from one unit of TBMA decomposing. The recycled stream goes back to the front of the reactor. Isobutene is a chain transfer agent, thus the MFR₂ is difficult to keep low if the formation of isobutene is too extensive.

**Table 2, weight loss of TBMA**

| Time | wt% loss Isobutene 230°C | wt% loss Isobutene 250°C | wt% loss Isobutene 270°C |
|---|---|---|---|
| 0 | 0 | 0 | 0 |
| 5 | 0.3 | 1.0 | 2.3 |
| 10 | 0.6 | 1.8 | 2.8 |
| 15 | 0.9 | 2.2 | 3.1 |
| 20 | 1.0 | 2.5 | 3.1* |
| 25 | 1.2 | 2.7 | 3.1* |
| 30 | 1.4 | 2.9 | 3.1* |

| | | | |
|---|---|---|---|
| * full decomposition | | | |

In table 2 a produced copolymer of ethylene and 7.7 wt% of TBMA is analysed by TGA. The recorded weight loss is coming from the isobutene formed from the ester pyrolysis reaction. As seen from Table 2 the formation of isobutene seen from the reduction of weight is temperature dependant. 3.1 % reduction in weight in the experiment is from a copolymer with 100 % of the TBMA groups decomposed into methacrylic acid. The table further shows how important it is to control the temperature and residence time of the produced TBMA in order to control the ester pyrolysis reaction.

## Claims

1. Process for producing a polar ethylene copolymer comprising a polar comonomer of formula 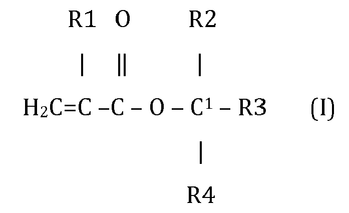
in which R1 is -H or an alkyl group with 1-6 carbon atoms,
R2, R3 & R4 each comprise an alkyl group with 1 to 6 carbon atoms
and the amount of polar comonomer of formula (I) is 3 to 40 wt% in the polar ethylene copolymer and the MFR₂ is 0.1 to 4 g/10min,
comprising the steps of;
a. feeding a high pressure reactor with fresh ethylene, the polar comonomer of formula (I),
b. recovering the polar ethylene copolymer in a subsequent step,
wherein that the fresh ethylene that is fed into the high pressure reactor is 99.5 wt% pure.

2. The process according to claim 1 wherein R1 is -CH₃.

3. The process according to claim 1 or claim 2 wherein all R2, R3 & R4 are the same.

4. The process according to claim 1 wherein R2, R3 & R4 are -CH₃.

5. The process according to any one of the preceding claims wherein the polar ethylene copolymer has an MFR₂ of 0.3 to 3 g/10min.

6. The process according to any one of the preceding claims wherein maximum peak temperature in the high pressure tubular reactor is below 290°C.

7. The process according to any one of the preceding claims wherein the residence time in the high pressure tubular reactor is at least 1 min.

8. The process according to any one of the preceding claims wherein the polar ethylene copolymer further comprises (meth)acrylic acid groups.

9. The process according to claim 8 comprising the step of creating (meth)acrylic acid groups in a post reactor process.

10. The process according to any one of the preceding claims wherein the fresh monomer feed to the high pressure reactor does not comprise (meth)acrylic acid.

11. The process according to any one of the preceding claims comprising the step of heat treating the polar ethylene copolymer downstream of the reactor at a temperature of from 200 to 300°C for a residence time of 5 to 30 min.

12. The process according to any one of the preceding claims comprising the step of heat treating the polar ethylene copolymer in the product receiver.

13. The process according to any one of the preceding claims wherein the polar ethylene copolymer comprises an amount of 0.1 to 20 wt% of (meth)acrylic acid groups.

14. The process according to any one of the preceding claims comprising the step of purifying the recycled stream in a separate step before the recycled stream is recycled.

15. The process according to any one of the preceding claims wherein the high pressure reactor has no feed of CTA.

16. A polar ethylene copolymer comprising a polar comonomer of formula 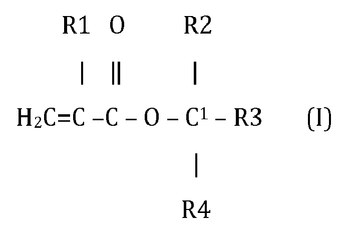
in which R1 is -H or an alkyl group with 1-6 carbon atoms,
R2, R3 & R4 each comprise an alkyl group with 1 to 6 carbon atoms
and the amount of polar comonomer of formula (I) is 3 to 40 wt% in the polar ethylene copolymer and the MF_{R2} is 0.1 to 4 g/10min.

17. The polar ethylene copolymer according to claim 16 is obtainable according to claim 1 to 15.

18. A layered structure comprising a substrate of metal and a polymer layer adjacent to the metal, wherein the polymer layer comprises the polar ethylene copolymer according to claim 16 or 17.

19. A cable comprising a metal conductor and at least one polymer layer comprises the polar ethylene copolymer according to claim 16 or 17 wherein the at least one polymer layer surrounds the metal conductor.

20. Use the polar ethylene copolymer comprising the polar comonomer of formula (I) according to claim 16 or 17 wherein the compounding and/or extrusion of the polar ethylene copolymer comprising a polar comonomer of formula (I) obtainable according to any one of the preceding claims is done at a maximum of 220°C.
